# EUROPÄISCHE PATENTSCHRIFT

(11) **EP 0 796 298 B1**
(45) Veröffentlichungstag und Bekanntmachung des Hinweises auf die Patenterteilung: **31.03.1999**
(21) Anmeldenummer: 95941022.6
(22) Anmeldetag: 25.11.1995
(51) Int. Cl.: C09B 57/00, C07D 491/147, D06P 1/16

(54) **BENZOPYRANFARBSTOFFE UND DEREN ZWISCHENPRODUKTE**
BENZOPYRAN DYES AND THEIR INTERMEDIATES
COLORANTS DE BENZOPYRANNE ET LEURS PRODUITS INTERMEDIAIRES

(30) Priorität: 07.12.1994 DE 4443414
(43) Veröffentlichungstag der Anmeldung: 24.09.1997
(73) Patentinhaber: BASF AKTIENGESELLSCHAFT, 67056 Ludwigshafen (DE)
(72) Erfinder: REICHELT, Helmut, D-67435 Neustadt (DE); GRUND, Clemens, D-68199 Mannheim (DE); WAGENBLAST, Gerhard, D-67157 Wachenheim (DE)
(86) Internationale Anmeldenummer: EP9504658
(87) Internationale Veröffentlichungsnummer: WO9617893

(56) Entgegenhaltungen:
- DE-A- 1 569 777
- US-A- 3 880 869

## Beschreibung

Die vorliegende Erfindung betrifft neue Benzopyranfarbstoffe der Formel I 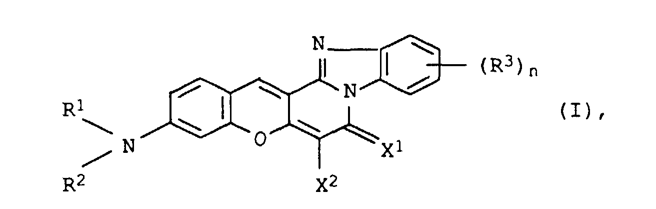 in der
- n: 1 oder 2,
- X¹: Sauerstoff oder Imino,
- X²: Cyano oder Carbamoyl,
- R¹: und R² unabhängig voneinander jeweils C₁-C₁₃-Alkyl, wobei die Summe der in R¹ und R² enthaltenen Kohlenstoffatome mindestens 10 betragen muß, und
- R³: Wasserstoff, C₁-C₆-Alkyl, C₁-C₆-Alkoxy, Halogen, Cyano, Nitro, Carbamoyl, C₁-C₄-Mono- oder Dialkylcarbamoyl, Sulfamoyl oder C₁-C₄-Mono- oder Dialkylsulfamoyl bedeuten,

Iminocumarine als deren Zwischenprodukte sowie die Verwendung der neuen Farbstoffe zum Färben oder Bedrucken von synthetischen Materialien.

Aus der US-A-3 880 869 sind bereits Benzopyranfarbstoffe bekannt. Es hat sich jedoch gezeigt, daß diese Produkte unbefriedigende anwendungstechnische Eigenschaften, insbesondere ein ungenügendes Aufziehverhalten, aufweisen.

Aufgabe der vorliegenden Erfindung war es daher, neue Benzopyranfarbstoffe bereitzustellen, die über vorteilhafte anwendungstechnische Eigenschaften, insbesondere ein vorzügliches Aufziehverhalten verfügen.

Demgemäß wurden die eingangs näher bezeichneten Benzopyranfarbstoffe der Formel I gefunden.

Alle in den hier genannten Formeln auftretenden Alkylreste können sowohl geradkettig als auch verzweigt sein.

Reste R¹, R² und R³ sind z.B. Methyl, Ethyl, Propyl, Isopropyl, Butyl, Isobutyl, sec-Butyl, Pentyl, Isopentyl, Neopentyl, tert-Pentyl, Hexyl oder 2-Methylpentyl.

Reste R¹ und R² sind weiterhin z.B. Heptyl, Octyl, 2-Ethylhexyl, Isooctyl, Nonyl, Isononyl, Decyl, Isodecyl, Undecyl, Dodecyl, Tridecyl oder Isotridecyl. [Die Bezeichnungen Isooctyl, Isononyl, Isodecyl und Isotridecyl sind Trivialbezichnungen und stammen von den nach der Oxosynthese erhaltenen Alkoholen (vgl. dazu Ullmann's Encyclopedia of Industrial Chemistry, 5th Edition, Vol. Al, Seiten 290 bis 293, sowie Vol. A 10, Seiten 284 und 285).]

Reste R³ sind weiterhin z.B. Methoxy, Ethoxy, Propoxy, Isopropoxy, Butoxy, Isobutoxy, sec-Butoxy, tert-Butoxy, Pentyloxy, Isopentyloxy, Neopentyloxy, tert-Pentyloxy, Hexyloxy, Fluor, Chlor, Brom, Mono- oder Dimethylcarbamoyl, Mono- oder Diethylcarbonyl, Mono- oder Dipropylcarbamoyl, Mono- oder Diisopropylcarbonyl, Mono- oder Dibutylcarbamoyl, N-Methyl-N-butylcarbamoyl, Mono- oder Dimethylsulfamoyl, Mono- oder Diethylsulfamoyl, Mono- oder Dipropylsulfamoly, Mono- oder Diisopropylsulfamoyl, Mono- oder Dibutylsulfamoyl oder N-Methyl-N-ethylsulfamoyl.

Bevorzugt sind Benzopyranfarbstoffe der Formel I, in der R¹ und R² unabhängig voneinander jeweils C₅-C₁₃-Alkyl, insbesondere C₅-C₁₀-Alkyl, bedeuten.

Bevorzugt sind weiterhin Benzopyranfarbstoffe der Formel I, in der R³ Wasserstoff, Methyl oder Chlor, insbesondere Wasserstoff, bedeutet.

Bevorzugt sind weiterhin Benzopyranfarbstoffe der Formel I, in der X¹ Imino bedeutet.

Bevorzugt sind weiterhin Benzopyranfarbstoffe der Formel I, in der X² Cyano bedeutet.

Ein weiterer Gegenstand der vorliegenden Erfindung sind Iminocumarine der Formel II 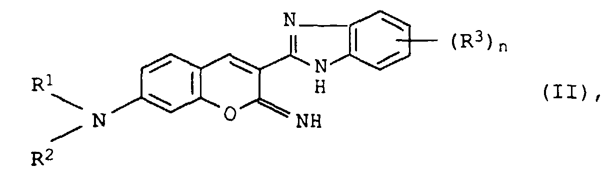 in der
- n: 1 oder 2,
- R¹: und R² unabhängig voneinander C₁-C₁₃-Alkyl, wobei die Summe der in R¹ und R² enthaltenen Kohlenstoffatome mindestens 10 betragen muß, und
- R³: Wasserstoff, C₁-C₆-Alkyl, C₁-C₆-Alkoxy, Halogen, Cyano, Nitro, Carbamoyl, C₁-C₄-Mono- oder Dialkylcarbamoyl, Sulfamoyl oder C₁-C₄-Mono- oder Dialkylsulfamoyl bedeuten.

Die Iminocumarine der Formel II können nach an sich bekannten Methoden erhalten werden. Beispielsweise kann man einen Aminosalicylaldehyd der Formel III 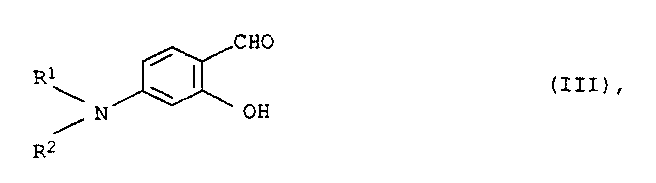 in der R¹ und R² jeweils die obengenannte Bedeutung besitzen, mit einem Cyanomethylbenzimidazol der Formel IV 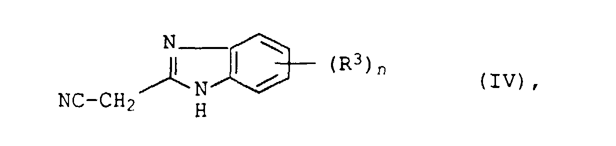 in der n und R³ jeweils die oben genannte Bedeutung besitzen, kondensieren.

Die Kondensation geschieht in der Regel, wie beispielsweise in der US-A-3 533 730 oder US-A-4 299 959 beschrieben, in einem Verdünnungsmittel (z.B. Alkohol oder N,N-Dimethylformamid) in Gegenwart einer Base (z.B. Piperidin oder Pyrrolidin) bei Raumtemperatur oder erhöhter Temperatur.

Die Iminocumarine der Formel II sind wertvolle Zwischenprodukte für die Herstellung der Benzopyranfarbstoffe der Formel I

Zur Herstellung der Benzopyranfarbstoffe der Formel I kondensiert man ein Iminocumarin der Formel II in einem Verdünnungsmittel mit Malodinitril oder einem Cyanessigsäure C₁-C₆-alkylester.

Diese Methode ist an sich bekannt und z.B. in der US-A-3 880 869 beschrieben.

Die neuen Benzopyranfarbstoffe der Formel I eignen sich in vorteilhafter Weise zum Färben oder Bedrucken von synthetischen Materialien, z.B. von Polyestern, Polyamiden oder Polycarbonaten. Insbesondere zu nennen sind Materialien in textiler Form, wie Fasern, Garne, Zwirne, Maschenware, Webware oder Non-wovens aus Polyester oder Polyamid, oder auch Polyester-Baumwolle-Mischung. Die erfindungsgemäßen Benzopyranfarbstoffe eignen sich weiterhin zum Färben von Keratinfasern, z.B. von Haaren oder Pelzen.

Die erfindungsgemäßen Benzopyranfarbstoffe zeichnen sich durch ein gutes Aufziehverhalten aus. Sie ergeben brillante, fluoreszierende Färbungen und Drucke in roten Farbtönen.

Die folgenden Beispiele sollen die Erfindung näher erläutern.

### Beispiel 1

Zu 400 ml Methanol wurden 41,6 g 2-Imino-3-(benzimidazol-2-yl)-7-dipentylaminocumarin, 8,6 g Malodinitril und 3 g Ameisensäure gegeben. Diese Mischung wurde unter Rühren 12 h unter Rückfluß erhitzt. Dann wurde abgekühlt und der resultierende Niederschlag abgesaugt, mit Methanol gewaschen und getrocknet. Man erhielt 42,3 g des Farbstoffs der Formel

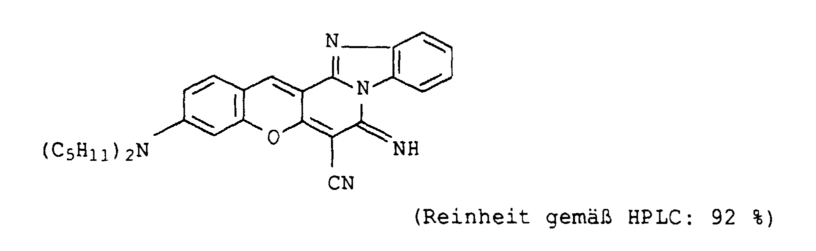

### Beispiel 2

Zu 400 ml Methanol wurden 44,4 g 2-Imino-3-(benzimidazol-2-yl)-7-dihexylaminocumarin, 8,6 g Malodinitril und 3 g Ameisensäure gegeben. Diese Mischung wurde unter Rühren in einem Autoklaven auf 100 bis 105°C erhitzt, wobei sich ein Druck von 3 bis 3,2 bar einstellte. Man rührte 2 h bei der genannten Temperatur nach, kühlte ab und entspannte. Der resultierende Niederschlag wurde abgesaugt, mit Methanol gewaschen und getrocknet. Man erhielt 44,4 g des Farbstoffs der Formel

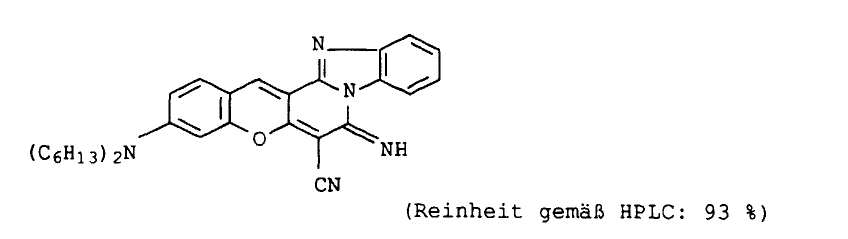

### Beispiel 3

Man verfuhr analog Beispiel 2, wobei die Reaktionszeit jedoch nur 1 h betrug. Man erhielt ein ähnlich günstiges Ergebnis.

### Beispiel 4

Man verfuhr analog Beispiel 2, verwendete jedoch nur 1 g Ameisensäure als Katalysator und erhielt ein ähnlich günstiges Ergebnis.

### Beispiel 5

Man verfuhr analog Beispiel 1, verwendete jedoch 1 g Titantetraethanolat als Katalysator und erhielt ein ähnlich günstiges Ergebnis.

### Beispiel 6

Man verfuhr analog Beispiel 2, verwendete jedoch 47,2 g 2-Imino-3-(benzimidazol-2-yl)-7-diheptylaminocumarin. Man erhielt 48,2 g des Farbstoffs der Formel

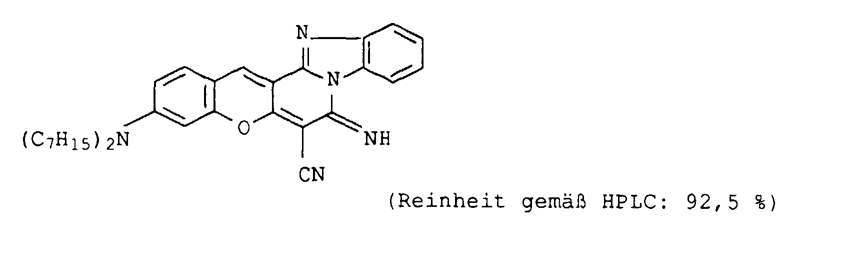

### Beispiel 7

Man verfuhr analog Beispiel 1, verwendete jedoch anstelle von 8,6 g Malodinitril 14,7 g Cyanessigsäureethylester und erhielt 43,0 g des Farbstoffs der Formel

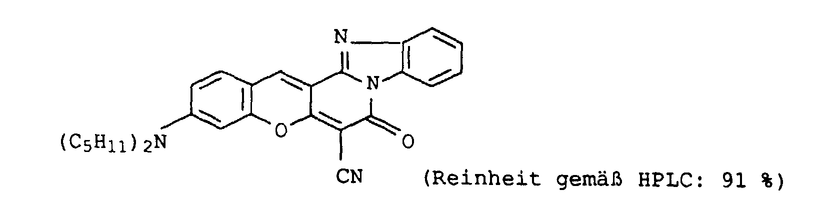

### Beispiel 8

Man verfuhr analog Beispiel 2, verwendet jedoch 43,0 g 2-Imino-3-(benzimidazol-2-yl)-7-(N-pentyl-N-hexylamino)cumarin. Man erhielt 43,4 g des Farbstoffs der Formel

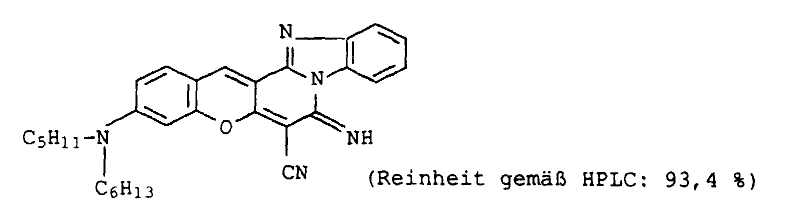

### Beispiel 9

15,7 g (0,1 mol) 2-Cyanomethylbenzimidazol und 27,7 g (0,1 mol) 4-Dipentylaminosalicylaldehyd wurden in 100 ml Methanol zusammengegeben, mit 1 ml Pyrrolidin versetzt und 3 h bei 40°C gerührt. Nach Abkühlen auf Raumtemperatur wurde der Niederschlag abgesaugt und mit 40 ml Methanol gewaschen. Man erhielt 26,8 g der Verbindung der Formel

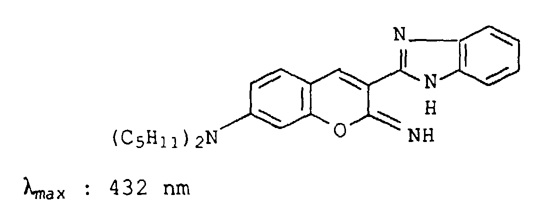

Analog Beispiel 9 werden die in der folgenden Tabelle aufgeführten Iminocumarine erhalten.

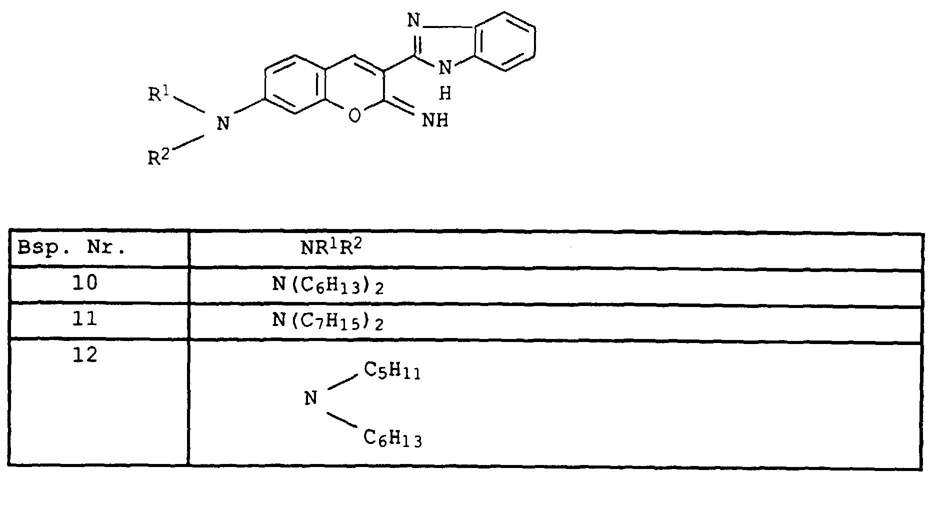

## Patentansprüche

1. Benzopyranfarbstoffe der Formel I 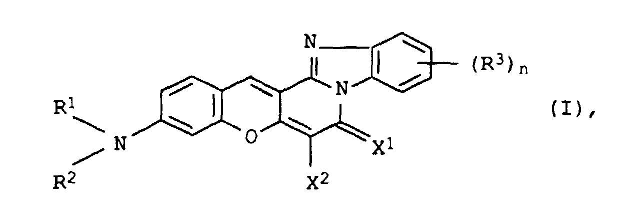 in der
n 1 oder 2,
X¹ Sauerstoff oder Imino,
X² Cyano oder Carbamoyl,
R¹ und R² unabhängig voneinander jeweils C₁-C₁₃-Alkyl, wobei die Summe der in R¹ und R² enthaltenen Kohlenstoffatome mindestens 10 betragen muß, und
R³ Wasserstoff, C₁-C₆-Alkyl, C₁-C₆-Alkoxy, Halogen, Cyano, Nitro, Carbamoyl, C1-C4-Mono- oder Dialkylcarbamoyl, Sulfamoyl oder C1-C4-Mono- oder Dialkylsulfamoyl bedeuten.

2. Benzopyranfarbstoffe nach Anspruch 1, dadurch gekennzeichnet, daß R¹ und R² unabhängig voneinander jeweils C₅-C₁₃-Alkyl bedeuten.

3. Benzopyranfarbstoffe nach Anspruch 1, dadurch gekennzeichnet, daß R³ Wasserstoff, Methyl oder Chlor bedeutet.

4. Benzopyranfarbstoffe nach Anspruch 1, dadurch gekennzeichnet, daß X¹ Imino bedeuten.

5. Benzopyranfarbstoffe nach Anspruch 1, dadurch gekennzeichnet, daß X² Cyano bedeutet.

6. Iminocumarine der Formel II 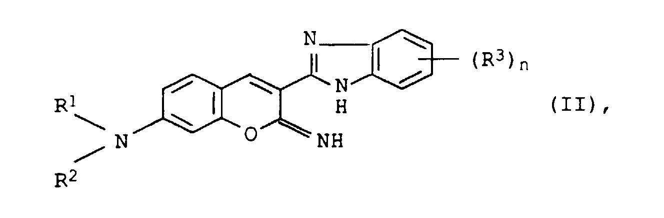 in der
n 1 oder 2,
R¹ und R² unabhängig voneinander jeweils C₁-C₁₃-Alkyl, wobei die Summe der in R¹ und R² enthaltenen Kohlenstoffatome mindestens 10 betragen muß, und
R³ Wasserstoff, C₁-C₆-Alkyl, C₁-C₆-Alkoxy, Halogen, Cyano, Nitro, Carbamoyl, C₁-C₄-Mono- oder Dialkylcarbamoyl, Sulfamoyl oder C₁-C₄-Mono- oder Dialkylsulfamoyl bedeuten.

7. Verwendung der Benzopyranfarbstoffe gemäß Anspruch 1 zum Färben oder Bedrucken von synthetischen Materialien.

## Claims

1. Benzopyran dyes of the formula I 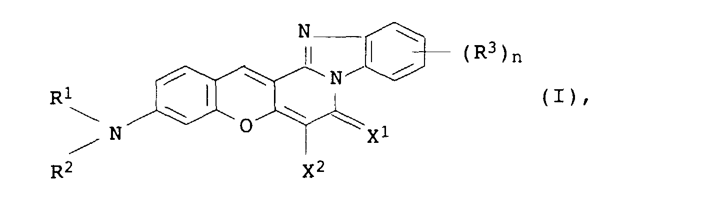 where
n is 1 or 2,
X¹ is oxygen or imino,
X² is cyano or carbamoyl,
R¹ and R² are independently of each other C₁-C₁₃-alkyl subject to the proviso that the sum total of the carbon atoms present in R¹ and R² shall be at least 10, and
R³ is hydrogen, C₁-C₆-alkyl, C₁-C₆-alkoxy, halogen, cyano, nitro, carbamoyl, mono- or di(C₁-C₄-alkyl)carbamoyl, sulfamoyl or mono- or di(C₁-C₄-alkyl)sulfamoyl.

2. Benzopyran dyes as claimed in claim 1 wherein R¹ and R² are independently of each other C₅-C₁₃-alkyl.

3. Benzopyran dyes as claimed in claim 1 wherein R³ is hydrogen, methyl or chlorine.

4. Benzopyran dyes as claimed in claim 1 wherein X¹ is imino.

5. Benzopyran dyes as claimed in claim 1 wherein X² is cyano.

6. Iminocoumarins of the formula II 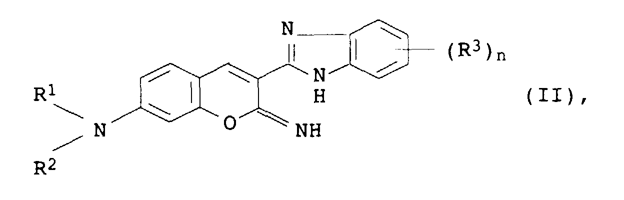 where
n is 1 or 2,
R¹ and R² are independently of each other C₁-C₁₃-alkyl subject to the proviso that the sum total of the carbon atoms present in R¹ and R² shall be at least 10, and
R³ is hydrogen, C₁-C₆-alkyl, C₁-C₆-alkoxy, halogen, cyano, nitro, carbamoyl, mono- or di(C₁-C₄-alkyl)carbamoyl, sulfamoyl or mono- or di(C₁-C₄-alkyl)sulfamoyl.

7. The use of the benzopyran dyes of claim 1 for dyeing or printing synthetic materials.

## Revendications

1. Colorant benzopyranique de formule I 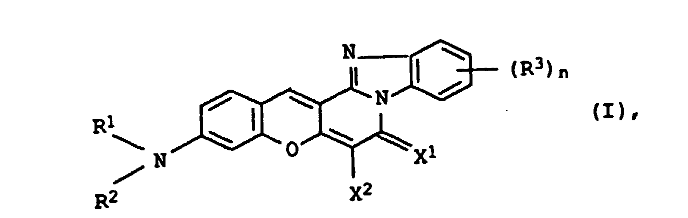 dans laquelle
n vaut 1 ou 2,
X¹ représente un atome d'oxygène ou groupement imino,
X² représente un groupement cyano ou carbamoyle,
R¹ et R² représentent chacun, indépendamment l'un de l'autre, un groupement alkyle en C₁-C₁₃, la somme des atomes de carbone contenus dans R¹ et R² devant s'élever au moins à 10, et
R³ représente un atome d'hydrogène, un groupement alkyle en C₁-C₆, alcoxy en C₁-C₆, un atome d'halogène, un groupement cyano, nitro, carbamoyle, mono- ou di(alkyle en C₁-C₄)carbamoyle, sulfamoyle ou mono- ou di(alkyle en C₁-C₄)sulfamoyle.

2. Colorant benzopyranique selon la revendication 1, caractérisé en ce que R¹ et R² représentent chacun indépendamment l'un de l'autre un groupement alkyle en C₅-C₁₃.

3. Colorant benzopyranique selon la revendication 1, caractérisé en ce que R³ représente un atome d'hydrogène, un groupement méthyle ou un atome de chlore.

4. Colorant benzopyranique selon la revendication 1, caractérisé en ce que X¹ représente un groupement imino.

5. Colorant benzopyranique selon la revendication 1, caractérisé en ce que X² représente un groupement cyano.

6. Iminocoumarine de formule II 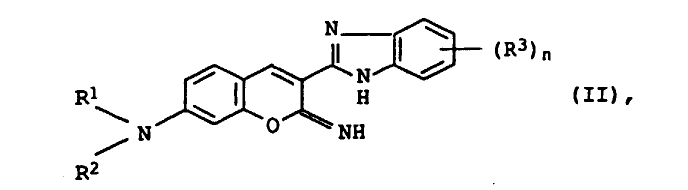 dans laquelle
n vaut 1 ou 2,
R¹ et R² représentent chacun, indépendamment l'un de l'autre, un groupement alkyle en C₁-C₁₃, la somme des atomes de carbone contenus dans R¹ et R² devant s'élever au moins à 10, et
R³ représente un atome d'hydrogène, un groupement alkyle en C₁-C₆, alcoxy en C₁-C₆, un atome d'halogène, un groupement cyano, nitro, carbamoyle, mono- ou di(alkyle en C₁-C₄)carbamoyle, sulfamoyle ou mono- ou di(alkyle en C₁-C₄)sulfamoyle.

7. Utilisation de colorants benzopyraniques selon la revendication 1 pour la teinture et l'impression de matériaux synthétiques.
